# EUROPEAN PATENT APPLICATION

(11) **EP 4 016 715 A1**
(43) Date of publication of application: **22.06.2022**
(21) Application number: 21193976.4
(22) Date of filing: 31.08.2021
(51) Int. Cl.: H01M 50/211, H01M 50/249, B60L 50/64

(54) **BATTERY PACK AND METHOD FOR MANUFACTURING THE SAME**

(30) Priority: 15.12.2020 KR 20200175421
(71) Applicant: HYUNDAI MOTOR COMPANY, Seoul 06797 (KR); Kia Corporation, Seocho-gu Seoul 06797 (KR)
(72) Inventor: OH, Yu Ri, 18280 Hwaseong-si, Gyeonggi-do (KR); CHOI, Yong Hwan, 18280 Hwaseong-si, Gyeonggi-do (KR); SHIN, Gyung Hoon, 18280 Hwaseong-si, Gyeonggi-do (KR); LIM, Hae Kyu, 18280 Hwaseong-si, Gyeonggi-do (KR); JUNG, Ji Woong, 18280 Hwaseong-si, Gyeonggi-do (KR)
(74) Representative: Viering, Jentschura & Partner mbB Patent- und Rechtsanwälte

(57) **Abstract**

A battery pack includes: a battery module assembly including a plurality of battery modules; and a case in which the battery module assembly is seated, wherein each battery module includes a laminated structure including a plurality of laminated battery cells and a cover disposed on a first side or a second side of the laminated structure and configured to cover the laminated structure, the cover includes a cover surface facing the laminated structure, and a first fastening part and a second fastening part, each the first and second fastening parts projecting in opposite directions and formed to project further than a side surface of the laminated structure from the cover surface in a direction in which the battery cells are laminated.

## Description

### FIELD

The present disclosure relates to a battery pack including a battery module and a method for manufacturing the battery pack.

### BACKGROUND

The statements in this section merely provide background information related to the present disclosure and may not constitute prior art.

Recently, according to the worldwide trends of carbon dioxide emission reduction, demands for an electric car, which generates driving power through driving of a motor with electric energy stored in an energy storage device such as a battery, instead of a typical internal combustion engine car, which generates driving power through combustion of fossil fuels, have been greatly increased.

The performance of the electric car greatly depends on the capacity and performance of the battery corresponding to an energy storage device for storing electric energy provided to a driving motor.

A vehicle battery, which stores the electric energy supplied to the motor so as to generate the driving power of the vehicle, not only should have excellent electrical-side characteristics, such as excellent charge/discharge performance and long use lifespan, but also should provide the high-level mechanical-side performance capable of being robust against a harsh vehicle driving environment, such as high temperature and high vibration.

Further, from the standpoint of a vehicle manufacturer, it is advantageous to configure battery hardware in the form of a module having a standardized size or capacity so as to be consistently applied to various vehicle types.

In addition, in manufacturing a battery pack having a shape that is actually attached to a vehicle through installation of a battery module having a standardized or normalized size in one case, a disposal structure capable of manifesting the best battery performance and spatial efficiency or a process efficiency capable of simplifying an assembling process has become an important issue to be considered in the corresponding technical field.

The foregoing is intended merely to aid in the understanding of the background of the present disclosure, and is not intended to mean that the present disclosure falls within the purview of the related art that is already known to those of ordinary skill in the art.

### SUMMARY

The present disclosure provides a battery pack, which can efficiently dispose a battery module and can provide an improved battery performance and excellent process efficiency, and a method for manufacturing the battery pack.

In one form of the present disclosure, a battery pack includes: a battery module assembly including a plurality of battery modules, each battery module of the plurality of battery modules including a laminated structure including a plurality of laminated battery cells and a cover disposed in front or at the rear of the laminated structure and configured to cover the laminated structure; and a case in which the battery module assembly is seated, wherein the cover includes a cover surface facing the laminated structure, and a first fastening part and a second fastening part formed to project more than a side surface of the laminated structure from the cover surface to both sides thereof in a direction in which the battery cells are laminated, and wherein a first battery module and a second battery module of the plurality of battery modules in the battery module assembly are arranged adjacent to each another in the direction in which the battery cells are laminated, the first fastening part of the first battery module in an arranged state and the second fastening part of the second battery module overlap each other in a height direction, and the first fastening part of the first battery module and the second fastening part of the second battery module are mutually fastened.

In one form of the present disclosure, the first fastening part and the second fastening part may include through-holes penetrated in an up/down direction, respectively, and through-holes formed in the first fastening part of the first battery module and the second fastening part of the second battery module may be disposed side-by-side in the height direction.

In one form of the present disclosure, an upper end of the first fastening part and a lower end of the second fastening part may have a substantially equal height.

In one form of the present disclosure, an insert nut may be disposed in the fastening part located in a lower position between the first fastening part and the second fastening part.

In one form of the present disclosure, the battery pack may further include a fastening member inserted into the through-holes disposed side-by-side and configured to fasten the first and second battery modules to each other.

In one form of the present disclosure, the fastening member may be a hollow bolt having a through-hole formed in a center part thereof in a fastening direction of the bolt.

In one form of the present disclosure, the battery pack may further include a hollow bolt inserted into the through-holes disposed side-by-side and configured to be combined with the insert nut through the metal bush, and including a through-hole formed in a center part thereof in a fastening direction of the bolt.

In one form of the present disclosure, a bush of a metal or rubber material may be disposed in the through-hole located in the fastening part that disposed in a higher position among the first fastening part and the second fastening part.

In one form of the present disclosure, the cover may further include an extension structure part connected from the cover surface to the first fastening part and to the second fastening part, and the extension structure part may be formed of a lattice structure including a hollow therein.

In one form of the present disclosure, the extension structure part may have a structure obliquely extending from a center part of the cover surface to the first fastening part and the second fastening part, and an empty space may be formed between the first fastening part and the second fastening part.

In one form of the present disclosure, the case may include a plurality of first members disposed side-by-side while extending in a first direction on a lower panel and on an upper surface of the lower panel, and a plurality of second members disposed side-by-side in a second direction vertical to the first direction, and the battery module assembly may be fastened to the two adjacent first members.

In one form of the present disclosure, the battery pack may further include a hollow bolt inserted into the through-holes disposed side-by-side, configured to fasten the neighboring battery modules to each other and including a through-hole formed in a center part thereof in a fastening direction of the bolt, and a bolt inserted into a through-hole formed in the hollow bolt and configured to fasten the battery module assembly to the first member.

In one form of the present disclosure, the first member may have a fastening hole in an area in which the bolt is fastened, and a pop nut inserted into the fastening hole so as to be combined with the bolt may be further included.

In one form of the present disclosure, the battery pack may further include a shoulder bolt configured to fasten, to the first member, the fastening part which is one of the first fastening part and the second fastening part, and spaced apart at a predetermined interval from an upper surface of the first member without being fastened to the fastening part of the neighboring battery module, and including a shoulder part having a length that corresponds to the interval from a lower end of a head and is not inserted into a fastening hole formed in the first member.

In one form of the present disclosure, the battery pack may further include a shoulder bolt inserted into the outermost fastening part of the battery module assembly spaced apart at a predetermined interval from the upper surface of the first member, configured to fasten the outermost fastening part to the first member, and including a shoulder part that is not inserted into the fastening hole formed in the first member by a length corresponding to the interval from the lower end of the head.

In one form of the present disclosure, the first member may have a fastening hole in an area in which the shoulder bolt is fastened, and a pop nut inserted into the fastening hole so as to be combined with the bolt may be further included.

In one form of the present disclosure, the battery module assembly may be disposed so that the second member faces vertically to the direction in which the battery cells are laminated, and a case end plate configured to provide a pressure to a surface facing the battery module assembly may be further included.

In one form of the present disclosure, the case end plate may include a first surface facing the battery module assembly and a second surface bent opposite to a direction in which the battery module assembly is located from the first surface, and the second surface may be fastened to an upper surface of the second member.

In one form of the present disclosure, a side end part of the first surface may be fastened to the first member together with the outermost fastening part of the battery module assembly.

In another form of the present disclosure, a method for manufacturing a battery pack includes: preparing a plurality of battery modules, each battery module including a laminated structure including a plurality of laminated battery cells and a cover disposed in front or at the rear of the laminated structure and configured to cover the laminated structure; producing a battery module assembly including the plurality of battery modules by arranging the plurality of battery modules so that the plurality of battery modules are adjacent to one another in a direction in which the battery cells are laminated, arranging a first fastening part of one of the two neighboring battery modules and a second fastening part of the other of the two neighboring battery modules so that the first fastening part and the second fastening part overlap each other in a height direction, and mutually fastening the first fastening part and the second fastening part of the different battery modules overlapping each other; and seating the battery module assembly in a case.

In another form of the present disclosure, the case may include a plurality of first members disposed side-by-side on a lower panel and an upper surface of the lower panel and extending in a first direction, and a plurality of second members disposed side-by-side in a second direction vertical to the first direction, and the seating may include fastening the mutually fastened first fastening part and second fastening parts to the two adjacent first members.

In another form of the present disclosure, the battery module assembly may be disposed so that the second member faces vertically to the direction in which the battery cells are laminated, and the method may further include installing, between the second member and the battery module assembly, a case end plate configured to provide a pressure to a surface facing the battery module assembly.

According to the battery pack and the method for manufacturing the battery pack, it is possible to easily produce the battery module assembly through fastening between the battery modules by applying the fastening structure using the fastening parts formed on the front and rear covers of the battery module.

Further, according to the battery pack and the method for manufacturing the battery pack, since seating and fastening of the case can be performed in the unit of the produced battery module assembly, spatial utility for the battery pack packaging can be improved, and the battery pack can be advantageously standardized and publicized.

Further, according to the battery pack and the method for manufacturing the battery pack, the fastening part is formed to fasten the battery modules in the direction in which the battery cells are laminated in the battery module. Therefore, the surface pressure performance can be improved through a close contact structure between the battery modules in the battery assembly, and the surface pressure performance can be improved even in the unit of the battery assembly through additional installation of the case end plate in the case.

The effects that can be obtained from the present disclosure are not limited to the above-mentioned effects, and other unmentioned effects will be able to be clearly understood by those of ordinary skill in the art to which the present disclosure pertains from the following descriptions.

### DRAWINGS

In order that the disclosure may be well understood, there will now be described various forms thereof, given by way of example, reference being made to the accompanying drawings, in which:
FIG. 1 is a perspective view of a battery module included in a battery pack according to one form of the present disclosure, when viewed from the top;
FIG. 2 is a perspective view of the battery module illustrated in FIG. 1, when viewed from the bottom;
FIG. 3 is an exploded perspective view of the battery module illustrated in FIG. 1;
FIG. 4 is a view illustrating in more detail a portion in which a front cover or rear cover is assembled to the battery module illustrated in FIG. 1;
FIG. 5 is a front view explaining the concept of configuring a battery module assembly through mutual fastening of battery modules according to one form of the present disclosure;
FIG. 6 is a perspective view illustrating a battery module assembly configured through fastening of a plurality of battery modules according to one form of the present disclosure;
FIG. 7 is a plan view of the battery module assembly illustrated in FIG. 6;
FIG. 8 is a view illustrating an example of a fastening member used for fastening between battery modules when manufacturing a battery module assembly of a battery pack according to one form of the present disclosure;
FIG. 9 is a plan view of a battery pack according to one form of the present disclosure;
FIG. 10 is a perspective view illustrating a state in which a battery module assembly is fastened to a lower case in a battery pack according to one form of the present disclosure;
FIG. 11 is a cross-sectional view illustrating in more detail a fastening structure between a battery module assembly and a case according to one form of the present disclosure, and illustrates a cross-section of areas corresponding to a reference numeral "A" illustrated in FIG. 10;
FIG. 12 is a cross-sectional view illustrating in more detail a fastening structure between a battery module assembly and a case according to one form of the present disclosure, and illustrates a cross-section of areas corresponding to a reference numeral "B" illustrated in FIG. 10;
FIG. 13 is a perspective view explaining the concept of installing a case end module of a battery pack according to one form of the present disclosure;
FIG. 14 is a perspective view illustrating in more detail the state in which the case end module of FIG. 13 is installed;
FIG. 15 is a view illustrating a cross-section of a second surface of the case end module illustrated in FIG. 14 fastened to a vertical member;
FIG. 16 is a view illustrating a cross-section of a first surface of the case end module illustrated in FIG. 14 fastened to a horizontal member; and
FIG. 17 is a perspective view illustrating a state in which a fastening structure for vehicle attachment is applied in a state in which a battery module assembly is seated in a case in a battery pack according to one form of the present disclosure.

The drawings described herein are for illustration purposes only and are not intended to limit the scope of the present disclosure in any way.

### DETAILED DESCRIPTION

The following description is merely exemplary in nature and is not intended to limit the present disclosure, application, or uses. It should be understood that throughout the drawings, corresponding reference numerals indicate like or corresponding parts and features.

Hereinafter, a battery pack and a method for manufacturing the battery pack according to various forms will be described in more detail with reference to the accompanying drawings.

First, a battery module that is applied to a battery pack according to various forms of the present disclosure will be briefly described.

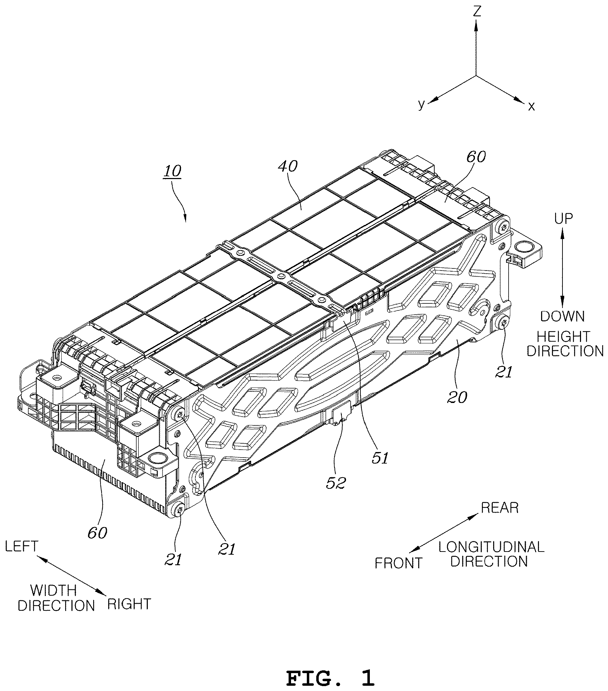

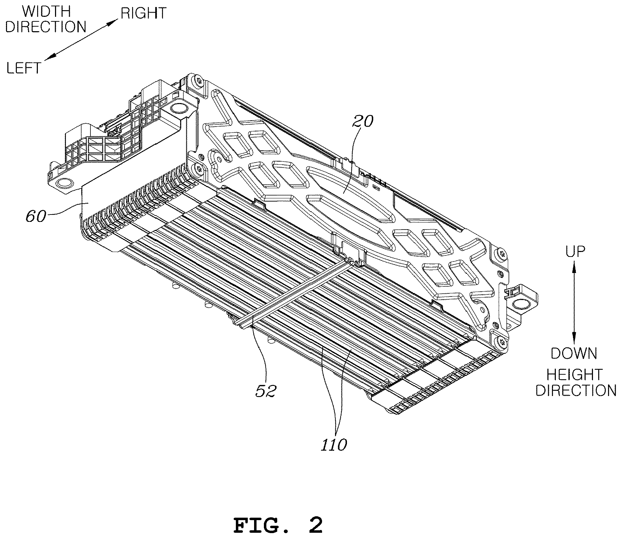

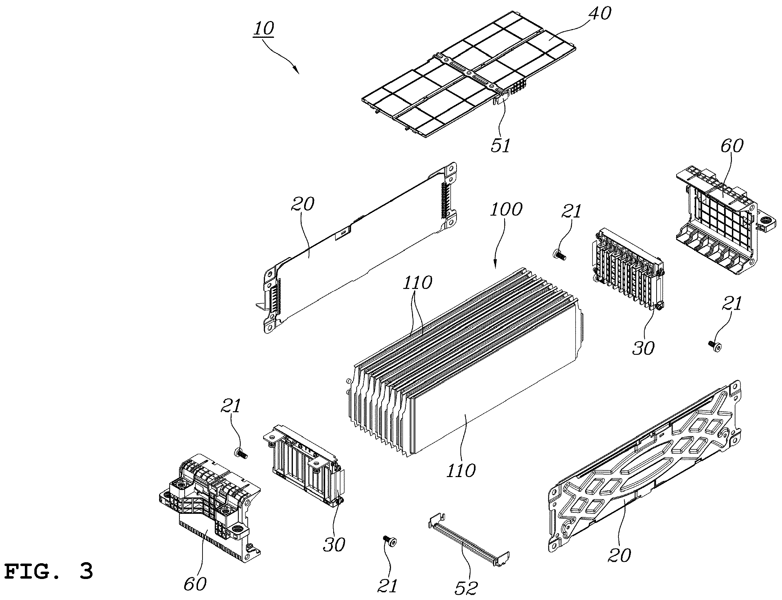

FIG. 1 is a perspective view of a battery module included in a battery pack according to one form of the present disclosure, when viewed from the top, FIG. 2 is a perspective view of the battery module illustrated in FIG. 1, when viewed from the bottom, and FIG. 3 is an exploded perspective view of the battery module illustrated in FIG. 1.

Hereinafter, for convenience in explanation, as indicated in FIGS. 1 and 2, it is assumed that surface directions in which covers 60 of a battery module 10 are installed are expressed as forward and rearward, a direction corresponding to a distance between the covers 60 is expressed as a length direction. Directions in which battery cells 110 are laminated, that is, surface directions in which end plates 20 of the battery module 10 are installed, are expressed as leftward and rightward, and a direction corresponding to a distance between the end plates 20 is expressed as a width direction. A surface direction in which an upper cover 40 is installed is expressed as upward and a surface direction facing the upward direction is expressed as downward, and a direction corresponding to the distance between a surface on which the upper cover 40 is installed and a surface facing the surface is expressed as a height direction. Such expressions may follow a typical object size expression scheme, and the width direction, the length direction, and the height direction may have mutual orthogonal relationships.

Referring to FIGS. 1 to 3, the battery module 10 applied to a battery pack according to one form of the present disclosure may be configured to include the plurality of battery cells 110 mutually laminated in the width direction, the pair of end plates 20 being in surface contact with both ends of a laminated structure 100 in the width direction, respectively, in which the plurality of battery cells 110 are laminated, a pair of busbar assemblies 30 disposed at both ends in the length direction of the structure 100 in which the plurality of battery cells 110 having electrodes mutually joined are laminated, the upper cover 40 configured to cover an upper part of the structure 100, in which the plurality of battery cells 110 are laminated, in the height direction, a first clamp 51 extending in the width direction from an upper part of the upper cover 40 and having both ends joined to the pair of end plates 20, respectively, and a second clamp 52 extending in the width direction from a lower part of the structure 100 in which the plurality of battery cells 110 are laminated and having both ends joined to the two end plates 20, respectively.

In particular, the battery module according to one form of the present disclosure may include front and rear covers 60 configured to cover the structure 100, in which the battery cells 110 are laminated, in the length direction from the outsides of the busbar assemblies 30, respectively.

The battery cell 110 may be implemented in the form of a pouch having electrodes at both ends thereof in the length direction, and one battery cell laminated structure 100 may be formed by laminating the plurality of battery cells 110 in the width direction.

Although not illustrated, between the battery cells 110, a surface pressure pad having compression elasticity may be provided to maintain a constant surface pressure and to absorb expansion of the battery cells 110 during swelling of the battery cells 110, and a double-sided tape or a hot melt may be interposed between the battery cells 110 for joining between the battery cells 110.

The pair of end plates 20 may be disposed to come in surface contact with surfaces located at both ends in the lamination direction of the battery cell laminated structure 100, that is, exposed surfaces of the outermost battery cell among the plurality of battery cells 110 forming the laminated structure 100.

The pair of end plates 20 are elements which are mutually maintained at a constant interval, inhibit the deformation in the battery module through their own stiffness in case that swelling of the battery cells 110 occurs, and uniformly maintain the surface pressure between the laminated battery cells 110. Accordingly, the end plates 20 should have stiffness enough to inhibit the deformation in the battery module while maintaining the surface contact with the battery cells 110, and an additional means for uniform surface pressure may be provided in the end plates 20.

The busbar assembly 30 may include busbars disposed in front and at the rear of the battery cell laminated structure 100 and configured to form an electrical connection between electrodes of the battery cells 110 disposed in front and at the rear of the laminated structure. The busbar assembly 30 may include the busbars of a metal material, joined to the electrodes of the battery cells 110, in an injection structure of an insulation material like plastics, and may be provided with a connector having pins connected to the busbars, so that the voltages of the battery cells 110 may be externally detected.

The busbar provided in the busbar assembly 30 may have an extension part extending for connection with another external battery cell module or terminal, and the extension part may be exposed through the front and rear covers 60.

The first clamp 51 and the second clamp 52 may extend in the width direction from upper and lower parts of the laminated structure 100, and both ends thereof are joined to the pair of end plates 20, so that the distance between the two end plates 20 may be maintained constantly. In particular, since the first clamp 51 and the second clamp 52 are joined in the center parts in the length direction of the two end plates 20, respectively, the first clamp 51 and the second clamp 52 restrain the center parts in the length direction of the two end plates 20 during the swelling of the battery cell 110, and thus can inhibit the battery module 10 from swelling.

The front and rear covers 60 can cover the surfaces corresponding to the front and the rear of the laminated structure 100 in the length direction of the battery cell laminated structure 100. The front and rear covers 60 are installed in symmetrical positions of the battery module 10 and have substantially the same configuration, and thus they are denoted by the same reference numeral.

Once the front and rear covers 60 are installed, the busbar assemblies 30 can be covered, and thus the battery module 10 can be finally completed. The front and rear covers 60 may include through-holes for exposing the elements that should be exposed out of the battery module (e.g., the extension parts of the busbars that should be exposed for an external electrical connection and the connectors having pins electrically connected to the busbars) among the elements provided in the busbar assemblies 30.

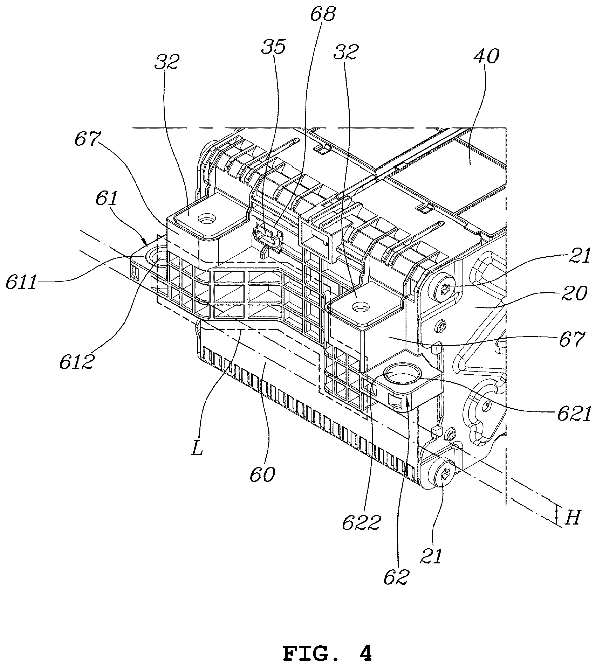

FIG. 4 is a view illustrating in more detail a portion in which the front cover or rear cover is assembled to the battery module illustrated in FIG. 1.

Referring to FIG. 4, each of the front and rear covers 60 of the battery module according to one form of the present disclosure may include a cover surface 601 facing the front and rear surfaces of the laminated structure 100, and a first fastening part 61 and a second fastening part 62 respectively projecting from both ends in the width direction of the cover surface 601 more than both sides of the laminated structure 100.

The first fastening part 61 and the second fastening part are elements provided to fasten a battery module to another adjacent battery module in case of configuring the battery pack, and the fastening part 61 may include a through-hole 611 penetrated in an up/down direction, and an insert nut 612 provided inside the through-hole 611, the fastening part 62 may include a through-hole 621 penetrated in an up/down direction and a bush 622 provided inside the through-hole 621.

Further, each of the front and rear covers 60 may include a seat part 67 projecting forward or rearward from the cover surface 601 and configured to expose an extension part 32 of the busbar, installed in the busbar assembly 30 inside the battery module 10, out of the battery module 10 and seat the extension part 32 therein, and a connector hole 68 formed in the cover surface 601 and configured to expose a connector 35, installed on the busbar assembly 30, to an outside.

Further, each of the front and rear covers 60 may include an extension structure part L connected from the cover surface 601 to the projecting fastening parts 61, 62, and the extension structure part L may be formed of a lattice structure having a hollow. If an impact is applied to the battery module 10, the extension structure part L may absorb the impact to secure stiffness. The extension structure part L may have a shape obliquely extending from the center part of the cover surface 601 to the respective fastening parts 61, 62 at a height corresponding to the two fastening parts 61, 62.

Meanwhile, the side part of each of the front and rear covers 60 may come in contact with the end plate 20. Side parts of the end plates 20, a second cover and a third cover 30 may be mutually combined through a bolt 21. Although not illustrated, in each of the two end plates 20, the bolt 21 may be combined with both ends of one long nut disposed inside the cover 60.

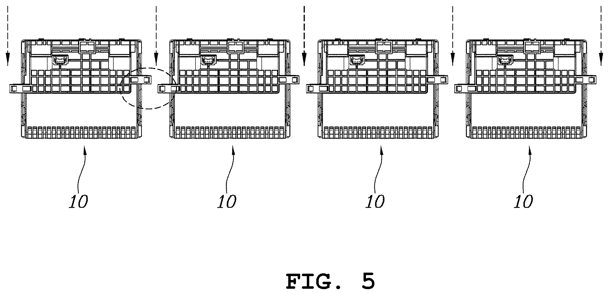

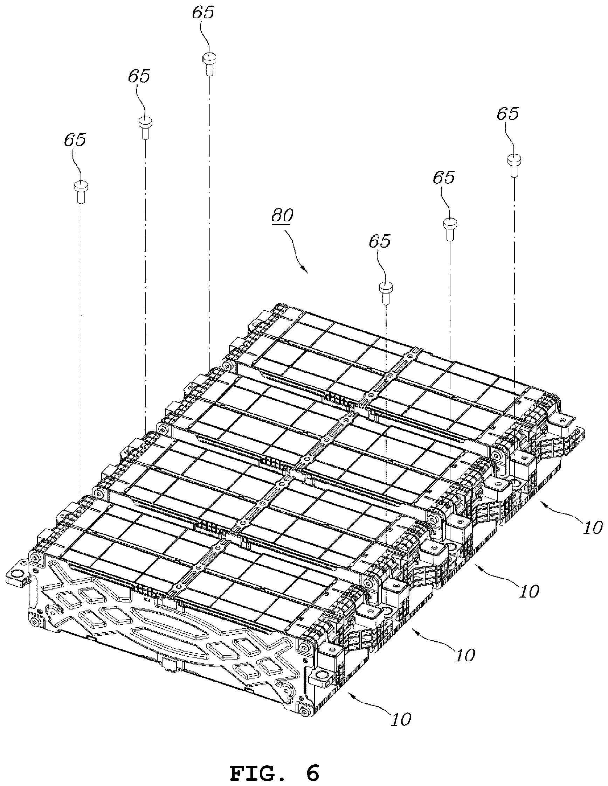

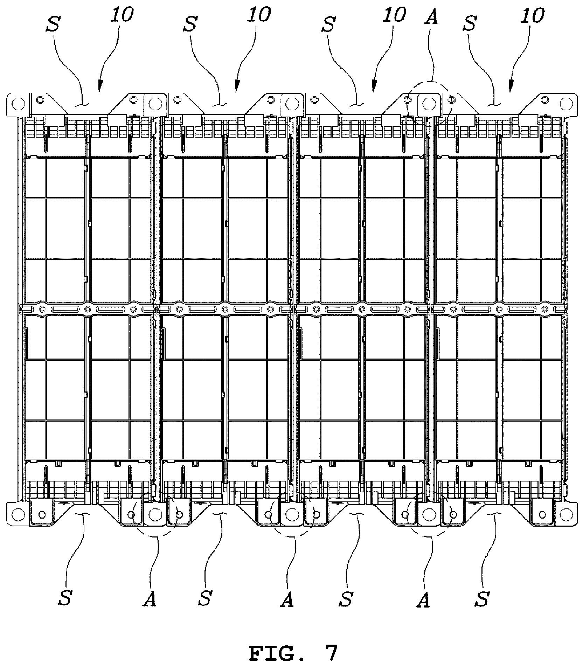

FIG. 5 is a front view explaining the concept of configuring a battery module assembly through mutual fastening of battery modules according to one form of the present disclosure, FIG. 6 is a perspective view illustrating a battery module assembly configured through fastening of a plurality of battery modules according to one form of the present disclosure, and FIG. 7 is a plan view of the battery module assembly illustrated in FIG. 6.

As illustrated in FIGS. 5 to 7, a battery pack according to one form of the present disclosure may be produced in a manner that a battery module assembly, which is a structure formed by fastening a predetermined number of battery modules 10 to one another, is first produced, and then the produced battery module assembly is mounted into a mounting area of a pre-prepared case.

Referring to FIGS. 5 to 7, a battery module assembly 80 may be produced by aligning and mutually fastening a plurality of battery modules 10 (four battery modules in an example illustrated in FIGS. 5 to 7) in a lateral direction (direction in which the battery cells are laminated in the battery module).

Here, alignment of the battery modules in the lateral direction means alignment of the battery modules in a direction in which battery cells are laminated in the battery modules. This is to make the surface pressure act even between the battery modules during swelling of the battery cells.

During fastening, the fastening parts 61, 62 of the neighboring modules may be disposed to overlap each other in an up/down direction, and the through-holes of the respective fastening parts may be disposed side by side in an up/down direction, so that one fastening member 65 may be inserted into the through-holes disposed side by side.

Here, it is preferable that the first fastening part 61 and the second fastening part 62, which are formed on the cover 60 of the battery module 10, are formed to have a height difference H so that the fastening parts of the neighboring battery modules can be disposed side-by-side. In particular, when the neighboring battery modules are fastened, it is most preferable that the height of a lower end of one fastening part 62 is substantially equal to the height of an upper end of the other fastening part 61 so that the fastening parts of the two battery modules, which are disposed to overlap each other, contact each other in an up/down direction.

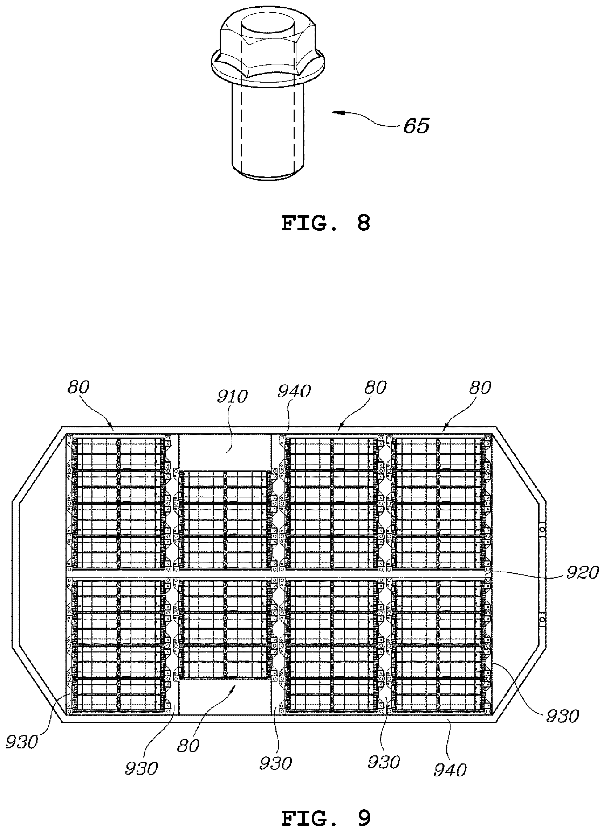

FIG. 8 is a view illustrating an example of a fastening member used for fastening between battery modules when manufacturing a battery module assembly of a battery pack according to one form of the present disclosure.

Referring to FIG. 8, in order to produce the battery module assembly, a hollow bolt 65 having a hollow may be used for fastening between the battery modules. The hollow bolt 65 is a bolt including a through-hole formed in the center part in a bolt fastening direction, and is a bolt produced to be able to install other members through the through-hole.

In one form of the present disclosure, the hollow bolt 35 will be able to be used for the purpose of fixing the battery module assembly itself to the case of the battery pack through insertion of an additional bolt into the through-hole of the hollow bolt 35. That is, the hollow bolt 35 may be used to mutually fasten the battery modules, and the battery module assembly is able to be fixed to the case through penetration of the additional bolt into the through-hole of the hollow bolt. According to the structure using the hollow bolt 35, the battery module fastening and the battery assembly case fastening can be performed together in one fastening space without separately providing a space for the fastening between the battery modules and the fastening of the case of the battery assembly, and thus the spatial utility can be improved.

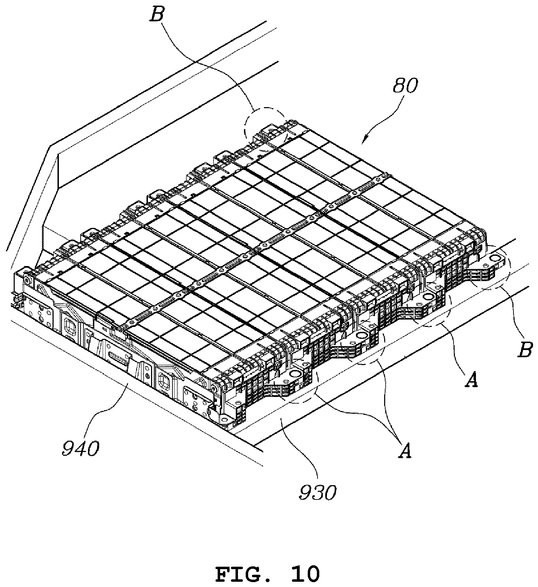

FIG. 9 is a plan view of a battery pack according to one form of the present disclosure, and FIG. 10 is a perspective view illustrating a state in which a battery module assembly is fastened to a lower case in a battery pack according to one form of the present disclosure.

Referring to FIGS. 9 and 10, a battery pack 90 according to one form of the disclosure may include a case 900 including a lower panel 910, a vertical member 920 and horizontal members 930 dividing an upper surface of the lower panel 910 into a plurality of area, and side members 940 disposed at a border part; and a battery module assembly 80 seated on the upper surface of the lower panel 910 of the case 900 and fixed to be fastened to the horizontal member 930.

In various forms of the present disclosure, the battery pack 90 may be produced by first producing the battery module assembly 80 through fastening of a predetermined number of battery modules 10 and by seating, fastening, and fixing the produced battery module assembly 80 into the case 900.

In one form of the present disclosure, the fastening part, which is used to perform the fastening between the battery modules in the battery module assembly, may also be used to fasten the battery module assembly into the case.

As illustrated in FIG. 10, the battery module assembly 80 may be seated on the case so that the fastening parts of the respective battery modules 10 are disposed on the horizontal members 930, and the vertical member 920 and the side members 940 are aligned in a direction parallel to the lamination surface of the laminated battery cells. The several members 920, 930, 940 may be used as a means for providing the stiffness of the battery case itself and fastening the battery module assembly 80 at the same time. Further, the members 920, 930, 940 may provide paths through which wirings necessary in the battery pack pass.

In various forms of the present disclosure, in the process of producing the battery module assembly 80, the battery module assembly 80 may be fastened to the case 900 using the first fastening part 61 and the second fastening part 62 that mutually fasten the battery modules 10.

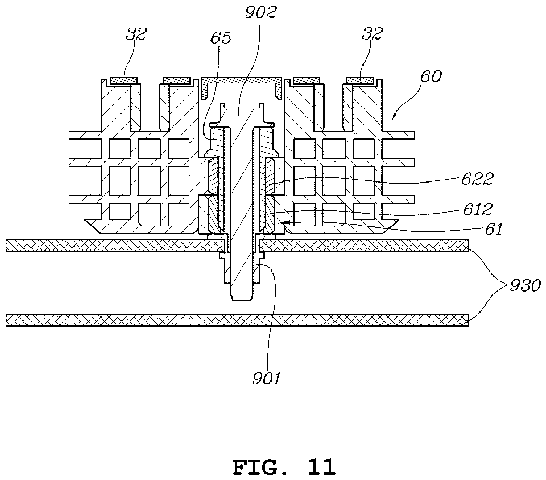

FIG. 11 is a cross-sectional view illustrating in more detail a fastening structure between a battery module assembly and a case according to one form of the present disclosure, and illustrates a cross-section of areas corresponding to the reference numeral "A" illustrated in FIG. 10. Here, "A" denotes a fastening part in which two battery modules are mutually fastened in the battery module assembly 80. Meanwhile, the reference numeral "B" of FIG. 10 illustrates a fastening part located at the outermost part of the battery module assembly 80, and corresponds to the second fastening part 62 located in a relatively higher position than the position of the first fastening part 61.

Referring to FIG. 11, since the second fastening part 62 of the left battery cell and the first fastening part 61 of the right battery cell in the drawing are disposed in an upper/lower relationship, through-holes formed in the respective fastening parts may be disposed side-by-side in an up/down position.

Since a bush 622 is installed inside the though-hole formed in the second fastening part 62 disposed on an upper part and an insert nut 612 is installed inside the through-hole formed in the first fastening part 61 disposed on a lower part in an overlapping state during the fastening, the hollow bolt 65 may be fastened to the overlapping through-holes, and thus the two battery modules may be mutually fastened. That is, the fastening may be formed in a manner that the hollow bolt 65 is combined with the insert nut 612 inside the through-hole located on the lower part through penetration of the bush 622 inside the through-hole located on the upper part. As the fastening between the battery modules 10 is formed by the hollow bolt 65 as described above, the battery module assembly can be produced.

The bush 622 may be made of a metal material in order to inhibit the cover mainly made of a plastic material from being damaged by a fastening force. As another example, the bush 622 may be made of a rubber material to inhibit the damage of the fastening structure or the occurrence of noise through absorption of an external vibration applied in a state where the battery modules 10 are mutually fastened.

In addition, the battery module assembly including the plurality of battery modules 10 mutually fastened by the hollow bolt 65 may be fastened by the horizontal members 930 of the case 900 and may be seated on the case. In this case, a fastening hole into which a fastening member can be inserted may be formed on the horizontal member 930, and a pop nut 901 may be inserted into the fastening hole.

Since a bolt 902 is inserted through a hollow formed in the hollow nut 65 that forms the fastening between the plurality of battery modules 10 and the inserted bolt 902 is fastened to the pop nut 901, the battery module assembly 80 including the plurality of battery modules 10 can be seated and mounted on the case.

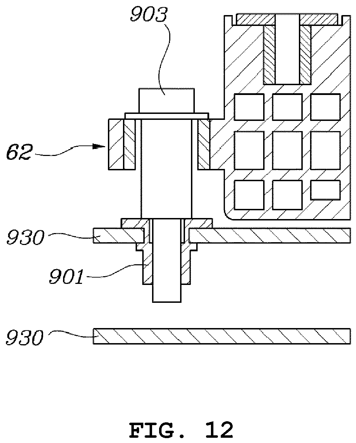

FIG. 12 is a cross-sectional view illustrating in more detail a fastening structure between a battery module assembly and a case according to one form of the present disclosure, and illustrates a cross-section of areas corresponding to a reference numeral "B" illustrated in FIG. 10.

The fastening parts formed on both sides of the cover 60 of the battery module have different heights, and if the fastening part (first fastening part 61) having a relatively low height is mounted in a state where the fastening part comes in contact with the horizontal members 930, one (second fastening part 62) of the fastening parts located in the outermost position of the battery module assembly becomes spaced apart from the upper surface of the horizontal member 930 at a predetermined interval.

Referring to FIG. 12, in one form of the present disclosure, in consideration of the spaced distance, a shoulder bolt 903 may be applied to the outermost fastening part located to be spaced apart from the upper surface of the horizontal member 930 at the predetermined interval.

The shoulder bolt 903 is a bolt capable of constantly configuring the interval between a head part of the bolt and the fastening part. That is, in one form of the present disclosure, it is possible to apply the shoulder bolt 903 including a shoulder part that is not inserted into the fastening hole as long as the distance from the lower end of the head to the fastening part 62 and the upper surface of the horizontal member 930. Of course, the pop nut 901 for fastening of the shoulder bolt 903 may be inserted into the fastening hole.

In various forms of the present disclosure, an additional end plate may be provided so as to improve the surface pressure characteristic during a cell swelling through applying of the pressure to the seated battery module assembly.

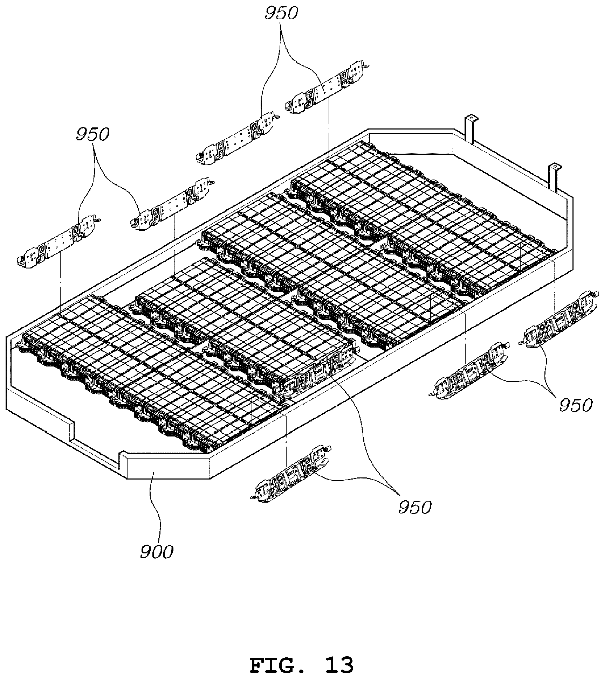

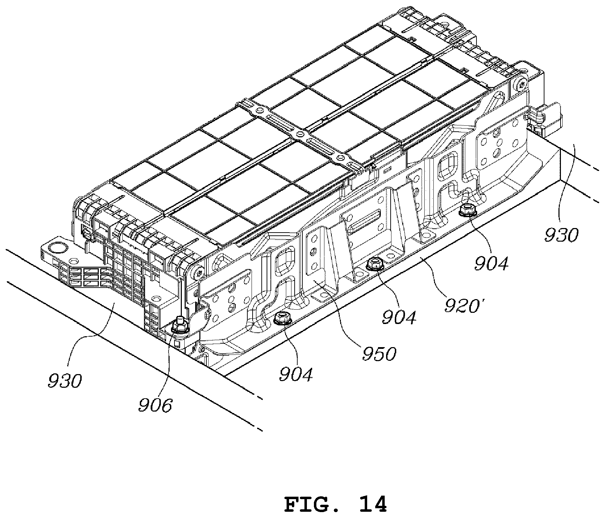

FIG. 13 is a perspective view explaining the concept of installing a case end module of a battery pack according to one form of the present disclosure, and FIG. 14 is a perspective view illustrating in more detail the state in which the case end module of FIG. 13 is installed.

As illustrated in FIGS. 13 and 14, case end modules 950 may be installed to face the battery module assembly vertically to a direction in which the battery modules in the battery module assembly are aligned, that is, a direction in which the battery cells in the battery module are laminated. That is, the case end plates 950 may be disposed in line with the side surface of the battery module assembly and may be disposed to face the side surface of the battery module assembly.

The case end plate 950 may have a first surface disposed to face the side surface of the battery module assembly and a second surface bent opposite to a direction, in which the battery module assembly is located, from the first surface. The second surface may be fastened to the upper surface of the vertical member 920', and the first surface may be fastened to the horizontal member 930. Here, the vertical member 920' may be a member, which is installed in line with the vertical member 920 illustrated in FIG. 9, but is formed with a height lower than the height of the vertical member 920 between the two horizontal members 930.

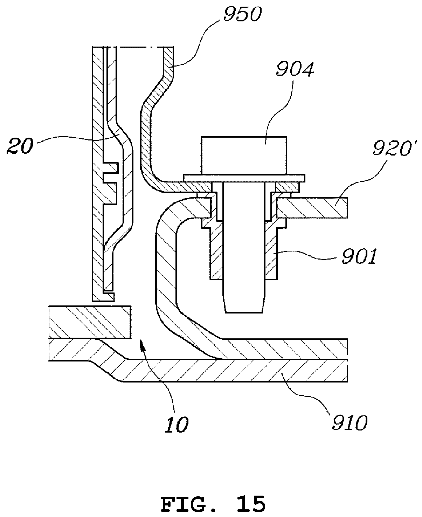

FIG. 15 is a view illustrating a cross-section of a second surface of the case end module illustrated in FIG. 14 fastened to a vertical member.

As illustrated in FIG. 15, the second surface of the case end module 950 may be fastened to the upper part of the vertical member 920' by a bolt 904. The pop nut 901 may be inserted into the fastening hole of the upper surface of the vertical member 920' to which the bolt 904 is fastened.

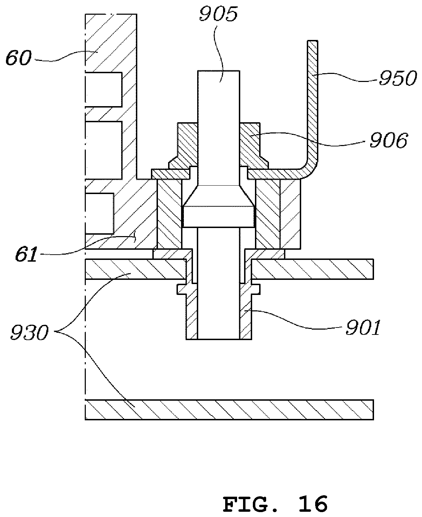

FIG. 16 is a view illustrating a cross-section of a first surface of the case end module illustrated in FIG. 14 fastened to a horizontal member.

As illustrated in FIG. 16, in one form of the present disclosure, the side end part of the first surface of the case end plate 950 may be fastened to the horizontal member 930 together with the outermost fastening part of the battery module assembly. The side end part of the case end module 950 may be bent and disposed in line with the fastening part 61 of the battery module assembly, and the guide pin 905 may be commonly inserted into the fastening hole formed on the side end part of the first surface of the case end plate 950, the through-hole of the fastening part 61, and the fastening hole of the horizontal member to perform location regulation. A screw thread for fastening may be formed at the lower end and the upper end of the guide pin 930, and a taper structure, which is widened as going to its lower part, may be formed in the center part of the guide pin 930, thereby an excessive insertion can be regulated.

By fastening the nut 906 to the upper part of the guide pin 905, the case end plate 950 and the battery module assembly may be fixed to the horizontal member 930.

As described above, since the both ends of the case end plate 950 are fastened to the both ends of the battery module assembly in the same location, not only the number of fastenings can be reduced but also a stronger surface pressure can be provided to the battery module assembly.

Although FIGS. 14 and 15 illustrate an example in which the second surface of the case end plate 950 is fixed to a separate vertical member, it may also be connected to another configuration capable of substantially serving as the vertical member provided in the case as another example. For example, any member that is disposed in a vertical direction and is formed in the vertical direction capable of forming a fastening hole, such as an extruded material provided in the side of the case may be used to fasten the second surface of the case end plate 950.

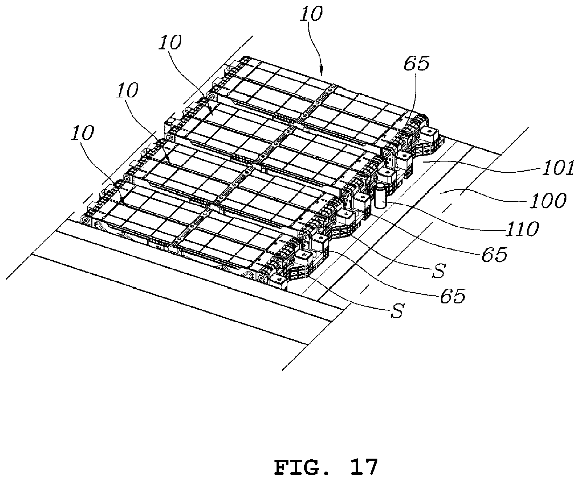

FIG. 17 is a perspective view illustrating a state in which a fastening structure for vehicle attachment is applied in a state in which a battery module assembly is seated in a case in a battery pack according to one form of the present disclosure.

As illustrated in FIG. 17, an extension structure part L formed on the front and rear covers 60 of the battery module applied to the battery pack according to various forms of the present disclosure may have a shape obliquely extending from the center part of the cover surface 601 to the respective fastening parts 61, 62 at the height corresponding to the two fastening parts 61, 62. Since the extension structure part L having such a shape is formed, an empty space S may be formed between the two fastening parts 61, 62. This empty space S may be used to install therein a fastening structure for mutually fastening the battery and the vehicle or to pass therethrough various wirings connected to the battery modules.

From the foregoing, although an example in which the covers 60 having substantially the same structure are disposed in front and in the rear of the battery modules 10 has been described, the present disclosure is not limited to such a structure in which the covers 60 having substantially the same structure are disposed both in front and in the rear of the battery modules. That is, in another form of the present disclosure, a cover having the above-described shape and fastening structure may be disposed only in front or in the rear of the battery modules 10, and a cover having a completely different structure may be disposed in the other of the front or the rear of the battery modules.

As described above, the present disclosure also provides a method for manufacturing a battery pack. The method for manufacturing a battery pack according to one form of the present disclosure may include first producing a battery module assembly 80 by mutually fastening the battery module 10 as described above and combining the produced battery module assembly 80 with a case. Such steps have been described in detail through the accompanying drawings.

In particular, in the method for manufacturing a battery pack according to one form of the present disclosure, it is possible to fix the battery module assembly into the member 930 of the case 900 by applying the overlapping fastening parts 61 and 62 combining the battery modules with one another in the battery module assembly as additional fastening members, and after installing the battery module assembly, it is possible to provide the surface pressure in the unit of a battery module assembly by additionally installing the case end plate.

Since the method for manufacturing a battery pack according to the present disclosure can be easily understood and embodied by those skilled in the art through the above-described explanations, additional detailed explanations thereof will be omitted.

As described above, according to the battery pack and the manufacturing method thereof according to various forms of the present disclosure, it is possible to easily produce the battery module assembly through fastening between the battery modules by applying the fastening structure using the fastening parts formed on the front and rear covers of the battery module in the battery assembly.

Since the seating and fastening of the case can be performed in the unit of the produced battery module assembly, spatial utility for packaging of the battery pack can be improved, and the battery pack can be advantageously standardized and publicized.

Further, since the fastening part is formed to fasten the battery modules in the direction in which the battery cells are laminated in the battery module, the surface pressure performance can be improved through a close contact structure between the battery modules in the battery assembly, and the surface pressure performance can be improved even in the unit of the battery assembly through additional installation of the case end plate in the case.

Although the specific forms of the present disclosure have been illustrated and described for illustrative purposes, those of ordinary skill in the art will appreciate that various modifications, additions and substitutions are possible, without departing from the scope and spirit of the present disclosure.

## Claims

1. A battery pack comprising:
a battery module assembly including a plurality of battery modules; and
a case in which the battery module assembly is seated,
wherein: each battery module includes a laminated structure including a plurality of laminated battery cells and a cover disposed on a first side or a second side of the laminated structure and configured to cover the laminated structure,
the cover includes a cover surface facing the laminated structure, and a first fastening part and a second fastening part, each the first and second fastening parts projecting in opposite directions and formed to project further than a side surface of the laminated structure from the cover surface in a direction in which the battery cells are laminated, and
wherein in an arranged state, a first battery module and a second battery module of the plurality of battery modules are arranged adjacent to one another in the direction in which the battery cells are laminated, the first fastening part of the first battery module and the second fastening part of the second battery module overlap each other in a height direction and are mutually fastened.

2. The battery pack according to claim 1, wherein the first fastening part and the second fastening part each includes a through-hole formed in an up/down direction, and the through-hole formed in the first fastening part of the first battery module and the through-hole formed in the second fastening part of the second battery module are disposed side-by-side in the height direction.

3. The battery pack according to claim 2, further comprising an insert nut disposed in the first fastening part located in a lower position than the second fastening part.

4. The battery pack according to claim 2 or 3, further comprising a fastening member inserted into the through-holes of the first fastening part of the first battery module and of the second fastening part of the second battery module disposed side-by-side and configured to fasten the first and second battery modules to each other, wherein optionally the fastening member is a hollow bolt including a through-hole formed in a center part thereof in a fastening direction of the hollow bolt.

5. The battery pack according to any one of claims 2 to 4, further comprising a bush of a metal or rubber material disposed in the through-hole located in the first fastening part that is disposed in a higher position than the second fastening part.

6. The battery pack according to any one of claims 1 to 5, wherein the case comprises: a plurality of first members disposed side-by-side while extending in a first direction on a lower panel and an upper surface of the lower panel; and a plurality of second members disposed side-by-side in a second direction vertical to the first direction, wherein the battery module assembly is fastened to two adjacent first members of the plurality of first members.

7. The battery pack according to claim 6, further comprising:
a hollow bolt inserted into the through-holes of the first fastening part of the first battery module and of the second fastening part of the second battery module disposed side-by-side, configured to fasten the first and second battery modules to each other, and including a through-hole formed in a center part thereof in a fastening direction of the bolt; and
a bolt inserted into a through-hole formed in the hollow bolt and configured to fasten the battery module assembly to a first member of the plurality of first members., wherein optionally the first member includes: a fastening hole in an area in which the bolt is fastened; and a pop nut inserted into the fastening hole and configured to be combined with the bolt.

8. The battery pack according to claim 6 or 7, further comprising a shoulder bolt configured to fasten the second fastening part to the first member, wherein the second fastening part is spaced apart at a predetermined interval from an upper surface of the first member and is not fastened to a first fastening part of a neighboring battery module, and including a shoulder part that is not inserted into a fastening hole formed in the first member by a length corresponding to the interval from a lower end of a head, wherein optionally the first member includes a fastening hole in an area in which the shoulder bolt is fastened, and further comprises a pop nut inserted into the fastening hole so as to be combined with the bolt.

9. The battery pack according to any one of claims 6 to 8, wherein the battery module assembly is disposed so that a second member of the plurality of second members faces vertically to the direction in which the battery cells are laminated, and further comprises a case end plate configured to provide a pressure to a surface facing the battery module assembly.

10. The battery pack according to claim 9, wherein the case end plate comprises:
a first surface facing the battery module assembly; and
a second surface bent from the first surface to a direction opposite at which the battery module assembly is located, and fastened to an upper surface of the second member, wherein optionally the first surface includes a side end part that is fastened to the first member together with an outermost fastening part of the battery module assembly.

11. The battery pack according to any one of claims 1 to 10, wherein an upper end of the first fastening part and a lower end of the second fastening part have a substantially equal height.

12. The battery pack according to any one of claims 1 to 11, wherein the cover further comprises an extension structure part connected from the cover surface to the first fastening part and to the second fastening part, wherein the extension structure part is formed of a lattice structure including a hollow therein, wherein optionally the extension structure part has a structure obliquely extending from a center part of the cover surface to the first fastening part and to the second fastening part, and the first fastening part and the second fastening part from an empty space therebetween.

13. A method for manufacturing a battery pack, the method comprising:
preparing a plurality of battery modules, each battery module of the plurality of battery modules including a laminated structure including: a plurality of laminated battery cells, and a cover disposed on a first side or a second side of the laminated structure and configured to cover the laminated structure;
producing a battery module assembly including the plurality of battery modules, wherein producing the battery module assembly includes:
arranging the plurality of battery modules so that a first battery module and a second battery module of the plurality of battery modules are adjacent to each another in a direction in which the battery cells are laminated,
arranging a first fastening part of a first battery module and a second fastening part of a second battery module to overlap each other in a height direction, and
mutually fastening the first fastening part of the first battery module and the second fastening part of the second battery module; and
seating the battery module assembly in a case.

14. The method according to claim 13, wherein:
the case includes a plurality of first members disposed side-by-side on a lower panel and on an upper surface of the lower panel and extending in a first direction, and a plurality of second members disposed side-by-side in a second direction vertical to the first direction, and
seating comprises fastening the mutually fastened first fastening part and the second fastening part to two adjacent first members.

15. The method according to claim 13 or 14, wherein the battery module assembly is disposed so that a second member of the plurality of second members faces vertically to the direction in which the battery cells are laminated, and
the method further comprises installing, between the second member and the battery module assembly, a case end plate configured to provide a pressure to a surface facing the battery module assembly.
